# EUROPÄISCHE PATENTSCHRIFT

(11) **EP 2 660 189 B1**
(45) Veröffentlichungstag und Bekanntmachung des Hinweises auf die Patenterteilung: **13.09.2017**
(21) Anmeldenummer: 13162790.3
(22) Anmeldetag: 08.04.2013
(51) Int. Cl.: B68C 1/02, B68C 1/04

(54) **Vorrichtung für eine Sitzauflage eines Reit- oder Transporttieres**
Seat support device for a riding animal or a pack animal
Dispositif pour un revêtement d'assise d'une monture ou d'un animal de transport

(30) Priorität: 13.04.2012 DE 102012103250
(43) Veröffentlichungstag der Anmeldung: 06.11.2013
(73) Patentinhaber: dt Saddlery GmbH design & technik, 83629 Weyarn (DE)
(72) Erfinder: Konzet, Hjalmar, 83629 Weyarn (DE); Gentilini, Claudia, 83629 Weyarn (DE)
(74) Vertreter: Heitzer, Christian

(56) Entgegenhaltungen:
- EP-A2- 2 275 382
- FR-A1- 2 876 682
- GB-A- 2 423 230
- US-A- 3 716 965

## Beschreibung

### 1. Technisches Gebiet

Die vorliegende Erfindung bezieht sich auf eine Vorrichtung für eine Sitzauflage eines Reit- oder Transporttieres, einen Sattelbaum sowie einen Sattel für Reit- und Transporttiere mit einem solchen Sattelbaum.

### 2. Stand der Technik

Im Reitsport, insbesondere im englischen Reitsport, werden unterschiedliche Sattelmodelle wie beispielsweise Vielseitigkeitssättel, Dressursättel und Springsättel verwendet. Ein Vielseitigkeitssattel ist ein Kompromiss zwischen Spring- und Dressursattel, dessen tiefster Punkt im Wesentlichen in der Sitzmitte liegt. Beim Dressursattel liegt der tiefste Sitzpunkt ebenfalls im Wesentlichen in der Sitzmitte, wohingegen sich der tiefste Punkt beim Springsattel etwas hinter der Mitte des Sitzes befindet.

Der Aufbau von Sätteln für Reittiere ist im Laufe der Zeit im Prinzip gleich geblieben. Die ursprünglichste Form ist der Bocksattel, der als Pack-, Last- bzw. Transportsattel eingesetzt wurde. Dieser bestand aus zwei Brettern, die links und rechts am Körper des Tieres anlagen und mit Hilfe von Bügeln vorne und hinten miteinander verbunden wurden. Damit der Bocksattel auch als Reitsattel dienen konnte, wurde er mit Kissen und Decken ausgepolstert. Etwa seit dem 18. Jahrhundert wird ein Sattelbaum verwendet, der als Kern bzw. Gerüst für einen Sattel zur Auflage auf den Rücken eines Reit- oder Transporttieres wie beispielsweise eines Pferdes, Ponys oder Esels dient.

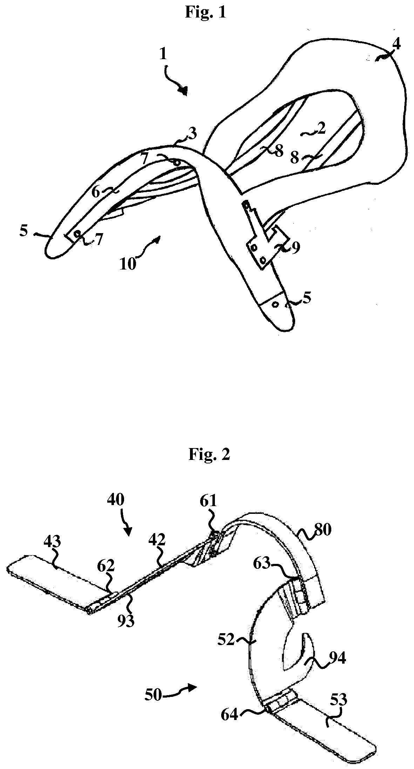

Ein Sattelbaum besteht in der Regel aus einer Vielzahl miteinander verleimter oder auf andere Art und Weise fest verbundener Teile. In Figur 1 ist ein Sattelbaum des Standes der Technik dargestellt. Der Sattelbaum 1 hat eine Sitzfläche 2, die sich zwischen einem Vorderzwiesel 3, auch als Sattelkopf oder Fork bezeichnet, und einem Hinterzwiesel 4 erstreckt. An den Enden des Vorderzwiesels 3 sind Ortsenden 5 bzw. Flügel ausgebildet. In das Vorderzwiesel 3, also an der dem Kopf des Reit- oder Transporttieres zugewandten Seite, ist ein Kopfeisen 6 angelegt und mit Befestigungsmitteln 7 befestigt. Zwischen dem Kopfeisen 6 und dem Hinterzwiesel 4 verlaufen zwei Längsfedern 8. Steigbügelriemenhalter 9 sind lösbar, beispielsweise mittels einer Vernietung oder Verschraubung, am Vorderzwiesel 3 befestigt. Der Sattelbaum 1 bildet an seinem vorderen Ende 3 eine Kammerwölbung 10 aus. Die Kammerwölbung 10 dient der Aufnahme des Widerrists des Reit- oder Transporttieres. Für den Fall, dass der Widerrist des Reit- oder Transporttieres hoch und schmal ausgebildet ist, ist die Kammerwölbung 10 entsprechend hoch und schmal auszulegen. Das entsprechende Gegenteil gilt für den Fall, dass der Widerrist niedrig und weit ausgestaltet ist. Die Breite bzw. Weite der Kammerwölbung wird als Kammerweite bezeichnet.

Die EP 2 159 187 A1 beschreibt beispielsweise einen Sattelbaum mit einer Auflagenseite zur Auflage auf den Rücken eines Reit- oder Packtieres und einer der Auflagenseite abgewandten Oberseite, mit einer Kammerwölbung zur Ausbildung der Kammerweite des Sattels und einem Kopfeisen zur Stabilisierung der Kammerwölbung, das quer zur Länge des Sattelbaumes entlang der Kammerwölbung verläuft, wobei das Kopfeisen an der Oberseite angeordnet ist. An das Material des Kopfeisens werden hohe Festigkeitsanforderungen gestellt, da dieses hohen mechanischen Belastungen ausgesetzt wird.

Die GB 2 423 230 A beschreibt einen verstellbaren Sattelbaum, der einen vorderen Bereich bzw. Sattelkopf, zwei seitliche Verstrebungen und einen hinteren Bereich umfasst. An der Unterseite des Sattelbaums sind ein Kopfeisen und vier Befestigungsplatten angebracht. Die Befestigungsplatten befinden sich an Ortsspitzen. Zwei benachbarte Befestigungsplatten sind jeweils über ein Scharnier feststellbar miteinander verbunden. An der Oberseite des Sattelbaums sind zwei Einstellvorrichtungen angebracht. Jede Einstellvorrichtung umfasst zwei Halterungsabschnitte, wobei ein Halterungsabschnitt am Sattelkopf und der andere Halterungsabschnitt an der Ortsspitze angebracht sind. Zwischen den Halterungsabschnitten ist ein Gewindebolzen ausgebildet, wodurch der Abstand zwischen den beiden Halterungsabschnitten verändert und damit der Winkel zwischen dem Sattelkopf und den Ortsspitzen fest verstellt werden kann.

Die US 3,716,965 beschreibt unterschiedliche Ausführungsformen von Gurtbefestigungsvorrichtungen für Reitsättel. Die Gurtbefestigungsvorrichtung umfasst Befestigungsplatten und eine verlängerte Strebe mit einem Ringabschnitt und einem vorderen Auge. Die gegenüberliegenden Enden der Strebe sind an den gegabelten Platten mittels Gelenkzapfen schwenkbar gesichert.

FR 2876682 A1 beschreibt eine einstellbare Vorrichtung für einen Sattelbaum, wobei eine einstellbare Verbindungsvorrichtung drei Teilstücke umfasst, die dazu bestimmt sind an einem Sattelbaum und einem Vorrichtungsbogen fixiert zu werden. Das erste Teilstück ist an dem mittleren Teilstück mittels eines ersten Gelenks befestigt und über unbewegliche Befestigungsmittel, welche verschiedene relative Positionen der beiden Teilstücke innerhalb einer gemeinsamen Schwenkebene erlauben verbunden. Das erste Teilstück und das mittlere Teilstück der Verbindungsvorrichtung sind über Mittel zur Fixierung feststellbar. Das dritte Teilstück ist mittels eines zweiten Gelenks am mittleren Teilstück schwenkbar befestigt. Das erste und das zweite Gelenk weisen eine gemeinsame Ausrichtung der Schwenkebene quer zur Längsachse auf.

Um eine möglichst große Passgenauigkeit eines Sattelbaumes bzw. Sattels zu erreichen, wird der Sattelbaum unter Berücksichtigung der physischen Beschaffenheit des Reiters, insbesondere des Gewichts und der Größe, möglichst optimal an die Anatomie des Rückens des zu sattelnden Reit- oder Transporttieres, insbesondere die Ausgestaltung dessen Widerrists, die muskuläre Ausgestaltung des Tieres, die Rasse, angeborene Anomalien, etc., angepasst. Ebenso erfordern unterschiedliche Reitweisen oder Verwendungszwecke individuell konzipierte Sattelbäume, um gesundheitliche Schäden des Reiters und Reit- oder Transporttieres von vornherein zu vermeiden oder möglichst gering zu halten.

In der Praxis werden Sattelbäume in einer großen Zahl von unterschiedlichen Größen und unterschiedlichen Kammerweiten angeboten. Die Kammerweite des Sattelbaumes kann geändert werden, indem das Kopfeisen angepasst oder ausgetauscht wird. Das Anpassen kann beispielsweise durch Aufbiegen bzw. Aufweiten oder Zusammenpressen bzw. Einengen des Kopfeisens erfolgen. In der Regel verwendet der Fachhändler oder Sattler hierzu ein Verstellgerät. Das Anpassen oder Austauschen des Kopfeisens ist insbesondere arbeitsintensiv und zeitaufwendig. Anschließend muss zudem häufig die Polsterung des
Sattels angepasst werden. Die starre und unbewegliche Gabelkonstruktion des Sattelkopfes und des Kopfeisens bietet nur für den Fall des optimalen Sitzes des Sattelbaumes bzw. Sattels auf dem Rücken des Tieres einen sicheren Halt für den Reiter.

Besteht der Sattelbaum aus einem Vollmaterialkörper, beispielsweise aus Holz, so weist der Sattelbaum einen Sattelkopf aus einem stabilen unnachgiebigen und festen Material auf und die Anpassung des Sattelbaumes an den Pferderücken erfolgt durch Hinzufügung oder Abtragung von Sattelbaummaterial, was zeitaufwendig und kostenintensiv ist.

Ein nicht angepasster und schlecht sitzender Sattelbaum bzw. Sattel hat insbesondere zur Folge, dass die Bewegung des Tieres eingeschränkt wird und Verletzungen des Tieres während des Reitens auftreten können. Ferner ist der Sattel nicht hinreichend stabil am Rücken des Tieres befestigt, wodurch der Reiter keine optimale Verbindung zum Tier aufbauen und der Sattel verrutschen kann.

Im Bereich des Pferdesports wird in der Praxis üblicherweise für jedes Reittier ein individuell angefertigter Sattel angeschafft. Dies trägt insbesondere der Tatsache Rechnung, dass Reittiere, insbesondere im Bereich der Sattelauflage, einen unterschiedlichen anatomischen Körperbau aufweisen. Reittiere wie Pferde haben häufig eine Schiefe, die im Sprachgebrauch als gute und schlechte Hand bezeichnet wird. Die Schiefe eines Reittieres kann beispielsweise geburtsbedingt, vererbt oder erworben sein. Die geburtsbedingte Schiefe ist in der Regel eine Folge der mangelnden Bewegung direkt nach der Geburt des Reittieres. Die erworbene Schiefe ist häufig auf eine mangelnde Bewegung des Reittieres während der Aufzuchtphase oder durch Verletzungen und anschließend längerer Schonhaltung zurückzuführen. Weiterhin kann durch eine fehlende oder unrichtige Gymnastizierung des Reit- oder Transporttieres durch einen Reiter eine angerittene Schiefe entstehen. Unter Gymnastizierung versteht man die Arbeit mit einem Reittier auf der Grundlage von wissenschaftlichen Erkenntnissen von der Anatomie, Physiologie und Psychologie des Tieres.

Zum Vermessen des Rückens des Reit- oder Transporttieres, insbesondere des Bereiches der Sattelauflage, werden unterschiedliche Messsysteme verwendet. Die Sattler ermitteln insbesondere die Ausgestaltung des Trapezmuskels links und rechts vom Widerrist des Reit- oder Transporttieres, die Ausprägung der Rückenmuskulatur, insbesondere links und rechts von den Dornfortsätzen und die Rückenform des Reit- oder Transporttieres, d.h. ob der Rücken gerade oder gebogen ist. Ferner werden die Schulterpartien sowie die Kammerweite des Reit- oder Transporttieres gemessen. Diese Vorgehensweise weist jedenfalls den Nachteil auf, dass der jeweils hergestellte Sattelbaum und Sattel mit einem solchen Sattelbaum nur für ein bestimmtes Reit- oder Transporttier geeignet ist und im Falle einer Veränderung der anatomischen Form des Rückens der aufwendig hergestellte Maßsattel nicht mehr optimal passt.

Es besteht derzeit die Notwendigkeit, dass sowohl bei der Anschaffung eines neuen Sattels für ein bestimmtes Reit- oder Transporttier als auch anschließend in regelmäßigen Abständen eine Kontrolle und Überprüfung erfolgen muss, ob der Sattel möglichst optimal auf dem Rücken des Reit- oder Transporttieres sitzt. In der Praxis muss bisher insbesondere im Falle einer Veränderung des Gewichts, der Muskulatur oder des Alters des Reit- oder Transporttieres eine Anpassung des Sattelbaumes bzw. Sattels erfolgen.

Der vorliegenden Erfindung liegt daher die Aufgabe zugrunde, eine Vorrichtung zum Anbringen an eine Sitzauflage eines Reit- oder Transporttieres, einen Sattelbaum sowie einen Sattel mit einem solchen Sattelbaum bereitzustellen, der einen vielseitigen Einsatzbereich ermöglicht, der bei unterschiedlich ausgeformten Rückenpartien und Widerristen verwendet werden kann ohne die Bewegungsfreiheit des Reit- oder Transporttieres zu behindern oder zu beschränken, der eine sichere Befestigung des Sattels auf dem Rücken des Reit- oder Transporttieres ermöglicht ohne partielle Druckstellen hervorzurufen, der eine verbesserte Verteilung der auf das Reit- oder Transporttier einwirkenden Lastkräfte bereitstellt und mit dem insbesondere die Nachteile des Standes der Technik überwunden werden können.

### 3. Zusammenfassung der Erfindung

Die vorliegende Erfindung löst die Aufgabe durch eine Vorrichtung für eine Sitzauflage eines Reit- oder Transporttieres gemäß dem unabhängigen Anspruch 1, einen Sattelbaum gemäß dem unabhängigen Anspruch 11 sowie einen Sattel gemäß dem unabhängigen Anspruch 13. Bevorzugte Ausführungsformen finden sich in den abhängigen Ansprüchen.

Die erfindungsgemäße Vorrichtung für eine Sitzauflage eines Reit- oder Transporttieres umfasst einen rechten mehrschenkligen Ansatz mit einem ersten Schenkelabschnitt und einem zweiten Schenkelabschnitt und einen linken mehrschenkligen Ansatz mit einem ersten Schenkelabschnitt und einem zweiten Schenkelabschnitt, wobei der rechte mehrschenklige Ansatz einen dritten Schenkelabschnitt und der linke mehrschenklige Ansatz einen dritten Schenkelabschnitt umfasst, wobei zwischen zwei benachbarten Schenkelabschnitten jeweils eine Schwenkeinrichtung mit einer Schwenkachse ausgebildet ist, um die zwei benachbarte Schenkelabschnitte im Wesentlichen innerhalb einer Schwenkebene, welche die Schwenkachse im Wesentlichen vertikal durchdringt, gegeneinander verschwenkbar sind. Die Schwenkeinrichtungen sind derart angeordnet, dass die Schwenkebene wenigstens einer der Schwenkeinrichtungen im Wesentlichen in Längsrichtung verschwenkbar ist.

Diese Anordnung der Schwenkeinrichtungen ermöglicht eine Verschwenkung der mehrschenkligen Ansätze in jeweils einer Richtung. Jede Schwenkeinrichtung stellt dazu einen Freiheitsgrad bereit, der durch die Lage seiner Schwenkebene im Raum definiert ist.

Ferner ermöglicht diese Anordnung der Schwenkeinrichtungen eine Verschwenkung der mehrschenkligen Ansätze sowohl im Wesentlichen in Längs- als auch im Wesentlichen in Querrichtung. Insbesondere nehmen die Schwenkeinrichtungen die Belastungen der beweglichen Teile und die dreidimensionalen Kraft- und Torsionskomponenten der Bewegungen auf. Jede Schwenkeinrichtung stellt einen Freiheitsgrad bereit.

Die Angabe im Wesentlichen vertikal umfasst bevorzugter Weise einen Kegelwinkelbereich von 20°. Die Schenkelabschnitte der mehrschenkligen Ansätze weisen jeweils eine definierte Länge auf. Der linke mehrschenklige Ansatz befindet sich links vom Widerrist und der rechte mehrschenklige Ansatz befindet sich rechts vom Widerrist des Reit- oder Transporttieres, betrachtet vom Schweif zum Kopf des Reit- oder Transporttieres. Die Bezeichnung in Längsrichtung bedeutet im Wesentlichen parallel zur Wirbelsäule eines Reit- oder Transporttieres , d.h. in Richtung vom Kopf zum Schweif, und die Bezeichnung Querrichtung bedeutet im Wesentlichen quer zur Wirbelsäule bzw. der Körperlänge eines Reit- oder Transporttieres. Unter Reit- oder Transporttieren sind alle Tiere zu verstehen, auf denen eine Person reiten kann oder Waren transportiert werden können. Dazu zählen insbesondere Pferde, Ponys oder Esel.

Der erfindungsgemäße Vorrichtung dient zum Anbringen an eine Sitzauflage eines Reit- oder Transporttieres und bietet den Vorteil, dass diese auf jedes Reit- und Transporttier eingesetzt werden kann, wobei der individuellen anatomischen Rückenform des Reit- oder Transporttieres optimal Rechnung getragen und gleichzeitig gewährleistet wird, dass die Wirbelsäule sowie der Widerrist und der Trapezmuskel des jeweiligen Reit- oder Transporttieres selbst auf jeden Fall von einer Belastung freigehalten wird. Die Vorrichtung ist unabhängig von der anatomischen Form des Rückens des Reit- oder Transporttieres verwendbar. Die erfindungsgemäße Vorrichtung weist keinen Sattelkopf und/oder kein Kopfeisen auf, so dass insbesondere eine nachträgliche Anpassung oder Justierung des Sattelkopfes bzw. des Kopfeisens entfällt. Insbesondere im Falle einer Veränderung des Gewichts, der Muskulatur oder des Alters des Reit- oder Transporttieres erübrigt sich ein arbeitsintensives und zeitaufwendiges Aufweiten oder Einengen des Kopfeisens. Ein Sattelkopf bzw. ein Kopfeisen ist durch den erfindungsgemäßen Aufbau nicht erforderlich. Die flexible Konstruktion und Ausgestaltung der Vorrichtung ermöglicht eine Verwendung auch bei empfindlichen, bereits verletzten oder exterieurmäßig ungewöhnlichen Reit- oder Transporttieren.

Die erfindungsgemäße Vorrichtung kann für eine Vielzahl von Sätteln wie beispielsweise für Spring-, Dressur-, Vielseitigkeits-, Western-, Trachten-, Gangpferde-, Wander-, Distanz-, und Damensättel, englische, iberische, spanische Sättel oder Last- und Transportsättel und kann bei unterschiedlichen Ausführungen der Sitzauflage oder der Lastauflagefläche für die Reitperson verwendet werden.

Vorteilhafter Weise ist eine Verwendung der erfindungsgemäßen Vorrichtung bzw. des erfindungsgemäßen Sattelbaumes und des erfindungsgemäßen Sattels mit einem solchen Sattelbaum ohne Vermessung des Rückens des Reit- oder Transporttieres oder ohne individuelle Anpassung möglich. Die erfindungsgemäße Vorrichtung kann für verschiedene Reit- und Transporttiere, die unterschiedliche Rückenstrukturen, Widerriste, Schiefen oder Muskulaturen haben, verwendet werden.

Ein weiterer Vorteil der erfindungsgemäßen Vorrichtung liegt darin, dass diese Konstruktion den Widerrist des Reit- oder Transporttieres nicht belastet und dieser frei beweglich bleibt. Der Widerrist ist eine sehr empfindliche und verletzungsanfällige Körperstelle des Reit- oder Transporttieres. Die Ausgestaltungen des Standes der Technik mit einem Sattelkopf und/oder einem Kopfeisen haben insbesondere den Nachteil, dass der Wiederrist, der bisher als äußerst wichtig für die Balance und den sicheren Halt eines Sattels angesehen wurde, verletzt werden kann und dass der oft durch falsch angepasste Sättel fehlbelastete Trapezmuskel bei länger andauernden und starken Druckbelastungen atrophieren kann. Weiterhin behindern Sattelkopf und/oder Kopfeisen eine Rückkopplung durch die der Reiter über den Spannungszustand des Pferdes eine Antwort und einen Aufschluss über eine etwaige Beunruhigung des Reittieres erhalten kann. Eine solche Rückkopplung ermöglicht jedoch früh das Erkennen von Verletzungen oder Beeinträchtigungen des Reittieres. Durch das erfindungsgemäße Weglassen des Sattelkopfes und/oder Kopfeisens, die insbesondere für die Balance und das Sitzgefühl eines Reiters nicht benötigt werden, wird eine Rückkopplung des Reittiers zum Reiter sowie eine direkte Einwirkung und Kraftübertragung des Reiters auf die Rückenmuskulatur des Pferdes, insbesondere durch die Sitzauflage hindurch, ermöglicht. Insbesondere wird die Kommunikation zwischen Reiter und Reit- oder Transporttier verbessert. Der Reiter kann durch Gewichtsverlagerung oder durch Kraftübertragung mittels der Beine Befehle an das Reit- oder Transporttier weitergeben. Umgekehrt kann der Reiter Spannungszustände des Reit- oder Transporttieres früher wahrnehmen. Weiterhin kann die Hinterhandaktivität sowohl bei der Ausbildung von jungen Reit- oder Transporttieren als auch beim Reiten von ausgebildeten Pferden verbessert werden.

Der erfindungsgemäße Sattelbaum ist auf den Rücken eines Reit- oder Transporttieres auflegbar und am Reit- und Transporttier befestigbar. Durch die erfindungsgemäße Lösung wird ein Sattelbaum für Reit- und Transporttiere bereitgestellt, der eine Sitzfläche, die einen dem Kopf eines Reit- oder Transporttieres zugewandten vorderen Bereich, einen hinteren Bereich und zwei Seitenbereiche, und eine am Sattelbaum befestigbare erfindungsgemäße Vorrichtung umfasst. Der rechte mehrschenklige Ansatz und der linke mehrschenklige Ansatz sind am Sattelbaum befestigbar. Zwischen den zwei benachbarten Schenkelabschnitten ist jeweils eine Schwenkeinrichtung mit einer Schwenkachse ausgebildet, um die zwei benachbarte Schenkelabschnitte im Wesentlichen innerhalb einer Schwenkebene, welche die Schwenkachse im Wesentlichen vertikal durchdringt, gegeneinander verschwenkbar sind. Die Angabe im Wesentlichen vertikal umfasst bevorzugter Weise einen Kegelwinkelbereich von 20°.

Der erfindungsgemäße Sattel zur Auflage auf einen Rücken eines Reit- oder Transporttieres umfasst eine erfindungsgemäße Vorrichtung und zumindest ein an der Unterseite einer Sitzfläche befestigbares Polsterelement. Bevorzugter Weise umfasst der Sattel weiterhin einen erfindungsgemäßen Sattelbaum.

Es ist von Vorteil, dass die Beweglichkeit der Schulterblätter und der dazu gehörigen Muskulatur und der Sehnenansätze der Reit- oder Transporttiere durch den erfindungsgemäßen Sattel nicht beeinträchtigt wird. Insbesondere passen sich die beweglichen mehrschenkligen Ansätze der Vorrichtung sowohl während des Stehens als auch während der Bewegung an die Körperformen des Reit- oder Transporttieres an. Die Fixierung der Vorrichtung, des Sattelbaums bzw. des Sattels hinter den Schulterblättern des jeweiligen Reit- oder Transporttieres erfolgt bevorzugter Weise flexibel mittels einer Gurtbefestigungsvorrichtung, sie wird aber auch durch die Ausrichtung der einzelnen Schwenkelemente zwischen den einzelnen Schenkelabschnitten der mehrschenkligen Ansätze gewährleistet, die abgesehen vom Freiheitsgrad im Wesentlichen innerhalb ihrer jeweiligen Schwenkebene eine ansonsten starre Ausrichtung der angrenzenden Schenkelabschnitte bewahren. Die Vorrichtung, der Sattelbaum und der Sattel können für unterschiedliche Pferderassen und für verschieden ausgestaltete Rückenformen von Reit- und Transporttieren verwendet werden.

Die Schwenkeinrichtung ist in einer vorteilhaften Ausgestaltung so gestaltet, dass es ein möglichst geringes bewegungsabhängiges und/oder winkelabhängiges Gegen-Drehmoment erzeugt. In einer weiteren vorteilhaften Ausgestaltung weist die Schwenkeinrichtung ein definiertes, proportional zur Relativbewegung der an die Schwenkeinrichtung angrenzenden Schenkelabschnitte wirkendes Gegen-Drehmoment auf. Ein solches Gegen-Drehmoment ist beispielsweise durch innere Reibung des Schwenkelements oder durch Anbringen eines Reibungselements erzeugbar, das die Bewegung der Schenkelelemente dämpft.

In einer weiteren vorteilhaften Ausgestaltung weist die Schwenkeinrichtung ein definiertes, proportional zum Winkel zwischen den an die Schwenkeinrichtung angrenzenden Schenkelabschnitten wirkendes Gegen-Drehmoment auf. Ein solches Gegen-Drehmoment ist beispielsweise durch ein federndes Element erzeugbar, das auf die Schenkelelemente ein in eine Ausgangsposition rückstellend wirkendes Drehmoment ausübt. Ein solches Federelement kann zum Beispiel das Material der Schwenkeinrichtung selbst umfassen oder eine zusätzlich anbringbare Komponente mit definierter Federkonstante.

In einer weiteren bevorzugten Ausführungsform umfasst der rechte mehrschenklige Ansatz wenigstens einen weiteren Schenkelabschnitt und der linke mehrschenklige Ansatz wenigstens einen weiteren Schenkelabschnitt, wobei zwischen zwei benachbarten Schenkelabschnitten jeweils eine weitere Schwenkeinrichtung mit einer Schwenkachse ausgebildet ist, um die zwei benachbarten Schenkelabschnitte im Wesentlichen innerhalb einer Schwenkebene, welche die Schwenkachse im Wesentlichen vertikal durchdringt, gegeneinander verschwenkbar sind.

Die Angabe im Wesentlichen vertikal umfasst bevorzugter Weise einen Kegelwinkelbereich von 20°. Die gelenkige Ausgestaltung der mehrschenkligen Ansätze ermöglicht eine optimale Anpassung bzw. ein Anschmiegen der Vorrichtung an die Körperform und Rückenstruktur des Reit- oder Transporttieres. Ein Reiter kann durch die optimale Anpassung der Vorrichtung an den Rücken des Reit- oder Transporttieres eine enge Verbindung zum Tier aufbauen. Die hinter den Schulterblättern des Reit- oder Transporttieres ausgebildeten Schenkelabschnitte der mehrschenkligen Ansätze, die gleiche oder unterschiedliche Längen aufweisen können, ermöglichen ungestörte Bewegungen der Muskulatur des Reit- oder Transporttieres, wodurch die Leistungsfähigkeit gesteigert und Gesundheitsbeeinträchtigungen verhindert werden können.

Vorteilhafter Weise schließen der zweite Schenkelabschnitt und der dritte Schenkelabschnitt des linken mehrschenkligen Ansatzes einen Winkelbereich zwischen 60° und 130°, insbesondere zwischen 70° und 120°, bevorzugter Weise zwischen 80° und 110° ein und der zweite Schenkelabschnitt und der dritte Schenkelabschnitt des rechten mehrschenkligen Ansatzes schließen einen Winkelbereich zwischen 60° und 130°, insbesondere zwischen 70° und 120°, bevorzugter Weise zwischen 80° und 110° ein. Durch die winklige Ausgestaltung wird eine Verschwenkung der Schenkelabschnitte sowohl im Wesentlichen in Längs- als auch im Wesentlichen in Querrichtung bereitgestellt. Die winkligen Ansätze umschließen den Körper des Reit- oder Transporttieres, ohne dass punktuelle Druckstellen oder kleinere Belastungsbereiche auftreten oder verursacht werden.

Bevorzugter Weise umfassen der letzte Schenkelabschnitt des linken mehrschenkligen Ansatzes und der letzte Schenkelabschnitt des rechten mehrschenkligen Ansatzes Ortsspitzen. Die Ortsspitzen sind beweglich und in einem großen Winkelbereich, beispielsweise von 350°, verschwenkbar ausgestaltet.

In einer bevorzugten Ausführungsform erstrecken sich der erste Schenkelabschnitt des linken mehrschenkligen Ansatzes und der erste Schenkelabschnitt des rechten mehrschenkligen Ansatzes jeweils zumindest teilweise bis zum hinteren Bereich der Sitzfläche. In diesem Fall bilden die jeweils ersten Schenkelabschnitte der Ansätze Längsstreben aus. Die Längsstreben sind vorzugsweise aus einem verformbaren Material und im Wesentlichen in den Seitenbereichen der Sitzfläche ausgebildet.

Vorteilhafter Weise umfasst die Vorrichtung und/oder der Sattelbaum faserverstärkten Kunststoff, insbesondere kohlenfaserverstärkten Kunststoff. Unter faserverstärktem Kunststoff versteht man einen Werkstoff, der aus Verstärkungsfasern und einer Kunststoffmatrix besteht. Die Matrix umgibt die Fasern, die durch Adhäsiv- oder Kohäsivkräfte an die Matrix gebunden sind. Unter kohlenstofffaserverstärkten Kunststoff versteht man einen Faser-Kunststoff-Verbundwerkstoff, bei dem Kohlenstofffasern, insbesondere in mehreren Lagen, als Verstärkung in eine Kunststoffmatrix eingebettet werden. Durch die Verwendung von Faserwerkstoffen weisen die Faser-Kunststoff-Verbunde ein richtungsabhängiges Elastizitätsverhalten auf. Faser-Kunststoff-Verbunde weisen insbesondere hohe spezifische Steifigkeiten und Festigkeiten auf.

In einer bevorzugten Ausführungsform ist zwischen dem ersten Schenkelabschnitt des linken mehrschenkligen Ansatzes und dem ersten Schenkelabschnitt des rechten mehrschenkligen Ansatzes zumindest ein Verbindungssteg ausgebildet. Der Verbindungssteg weist insbesondere eine Krümmung oder eine Biegung auf, die im Wesentlichen der Form eines Pferderückens entspricht. Durch den zumindest einen Verbindungssteg kann eine verbesserte Fixierung der jeweils ersten Schenkelabschnitte der Ansätze in Querrichtung erfolgen, wodurch die Vorrichtung und/oder der Sattelbaum höheren Krafteinwirkungen und Belastungen, die insbesondere bei schnellen Bewegungen des Reit- oder Transporttieres oder bei Springübungen auftreten, standhalten kann. In einer weiteren bevorzugten Ausführungsform sind zwischen dem ersten Schenkelabschnitt des linken mehrschenkligen Ansatzes und dem ersten Schenkelabschnitt des rechten mehrschenkligen Ansatzes zwei Verbindungsstege ausgebildet.

Vorteilhafter Weise umfasst jede Schwenkeinrichtung ein Scharnier oder eine Gelenkverbindung. Jede Schwenkeinrichtung kann aber auch ein Filmscharnier umfassen, d.h. mittels einer Materialverjüngung oder durch einzelne ausgeprägte Verbindungsstege gebildet werden. Ein Filmscharnier zeichnet sich dadurch aus, dass zwei zu verbindende Elemente einteilig ausgebildet sind. Die Filmscharniere umfassen im Wesentlichen eine materialverjüngte bzw. dünnwandigere oder ausgeprägte einzelne Materialstege aufweisende Verbindung, die durch ihre Biegsamkeit eine Drehbewegung der verbundenen Teile im Wesentlichen innerhalb einer definierten Schwenkebene ermöglicht. Das Scharnier muss die Last der beweglichen Bauteile, insbesondere Schenkelabschnitte der Ansätze, und die Bewegungskräfte aufnehmen können, wobei es insbesondere als Lager mit einem Freiheitsgrad im Wesentlichen innerhalb einer definierten Schwenkebene dient. Der Fachmann erkennt, dass die wenigstens eine Schwenkeinrichtung aus einer flexiblen Verbindung gebildet werden kann, wie zum Beispiel aus elastischen oder nicht-elastischen Bändern, in Schnürung angebrachten Metallseilen, insbesondere Stahlseilen oder anderen innerhalb der Schwenkebene frei beweglichen und quer zur Schwenkebene stabilen Verbindungen. Beispielsweise kann die Schwenkeinrichtung aus einem halbflexiblen Gewebe ausgebildet sein, insbesondere textilverstärkten Gummi-, Kunststoff-, Leder- oder Synthetikbänder oder bänder- oder schnurähnlichen Verbindungen aus beliebigem Material.

In einer bevorzugten Ausgestaltung umfasst ein Schenkelabschnitt, vorzugsweise der zweite Schenkelabschnitt des rechten mehrschenkligen Ansatzes einen ersten Steigbügelriemenhalter und ein Schenkelabschnitt, vorzugsweise der zweite Schenkelabschnitt des linken mehrschenkligen Ansatzes einen zweiten Steigbügelriemenhalter. Dadurch bilden die betreffenden einzelnen Schenkelabschnitte der Ansätze die Steigbügelriemenhalter aus und sind aus einem Stück herstellbar. Hierdurch können Kosten und Material eingespart und eine kompakte und sichere Konstruktion bereitgestellt werden.

In einer weiteren bevorzugten Ausführungsform sind am rechten mehrschenkligen Ansatz ein erster Steigbügelriemenhalter und am linken mehrschenkligen Ansatz ein zweiter Steigbügelriemenhalter mittels Befestigungsmitteln befestigt. In diesem Fall besteht die Möglichkeit verschieden ausgestaltete Steigbügelriemenhalter anzubringen und auszutauschen. Die Befestigung der Steigbügelriemenhalter erfolgt durch Befestigungsmittel, beispielsweise durch Schrauben, Nieten und/oder Klebemittel.

Im vorderen Bereich der Sitzfläche kann vorteilhafter Weise eine Aussparung ausgebildet sein, um eine verbesserte Beweglichkeit der Rückenmuskulatur und eine Schonung des Rückens des Reit- oder Transporttieres bereitzustellen. Die Aussparung bzw. Ausnehmung ist im vorderen Bereich der Sitzfläche ausgebildet.

Es ist von Vorteil, dass der rechte und der linke mehrschenklige Ansatz jeweils im Bereich der Ortsspitzen eine erste Gurtbefestigungseinrichtung, jeweils im vorderen Bereich der Sitzfläche eine zweite Gurtbefestigungseinrichtung und jeweils im hinteren Bereich der Sitzfläche eine dritte Gurtbefestigungseinrichtung umfassen. Die Gurtbefestigungseinrichtung kann beispielsweise einen Befestigungsbügel umfassen, der um einen Stift, der im Sattelbaummaterial fixiert ist, schwenkbar ist.

Bevorzugter Weise ist ein Ende eines Gurtes an der ersten Gurtbefestigungseinrichtung befestigbar, der Gurt ist durch eine Öffnung eines ersten Bügels führbar und an der dritten Gurtbefestigungseinrichtung befestigbar, der Gurt ist von der dritten Gurtbefestigungseinrichtung durch eine Öffnung eines zweiten Bügels führbar und ist an der zweiten Gurtbefestigungseinrichtung befestigbar. Die Öffnung ist beispielsweise ein Schlitz oder eine Öse. Diese bevorzugte Gurtführung ermöglicht eine sichere und feste Befestigung der Vorrichtung, des Sattelbaumes und/oder des Sattels am Rücken des Reit- oder Transporttieres und stellt dem Reiter einen sicheren Sitz bereit, wobei eine gezielte und verbesserte Einwirkung des Reiters auf das Reit- oder Transporttier erreicht werden kann.

Bei einer weiteren bevorzugten Gurtführung ist ein Ende eines Gurtes an der ersten Gurtbefestigungseinrichtung befestigbar, der Gurt ist durch eine Öffnung eines ersten Bügels führbar und an der dritten Gurtbefestigungseinrichtung befestigbar, anschließend ist der Gurt von der dritten Gurtbefestigungseinrichtung durch eine Öffnung eines zweiten Bügels und durch eine Membran unterhalb des Sattelbaumes über den Sattelbaum führbar und an der zweiten Gurtbefestigungseinrichtung befestigbar.

An der Unterseite der Sitzfläche ist zumindest ein Polsterelement befestigbar. In einer bevorzugten Ausführungsform sind an der der Unterseite der Sitzfläche wenigstens zwei getrennt ausgebildete Polsterelemente befestigbar. Hierdurch kann eine verbesserte Auflage auf dem Rücken des Reit- oder Transporttieres bereitgestellt werden und es können anatomisch unterschiedliche Körperpartien berücksichtigt werden. Weiterhin wird eine verbesserte Begurtung des Reit- oder Transporttieres erzielt.

Vorteilhafter Weise umfasst das Polsterelement eine Polsterung, eine Einlage und einen Überzug. Die Polsterung weist im Querschnitt eine im Wesentlichen U-förmige Form auf. Zwischen den Schenkeln der U-förmigen Polsterung ist die Einlage gebildet. Die Polsterung und die Einlage werden von einem Überzug, beispielsweise einem Lederüberzug, umschlossen. Jedes Polsterelement kann Durchtrittsöffnungen aufweisen, um die Befestigung des Polsterelements mittels Befestigungselementen am Sattelbaum zu erleichtern. Beispielsweise können Schrauben, Nieten und/oder Klebemittel als Befestigungselemente eingesetzt werden.

In einer bevorzugten Ausführungsform sind der Sattelbaum, der die Sitzfläche, den vorderen und hinteren Bereich und die beiden Seitenbereiche umfasst, und die Schenkelabschnitte des rechten und linken mehrschenkligen Ansatzes aus einem integralen Bauteil, also einstückig, ausgebildet. Die Schwenkeinrichtungen sind vorzugsweise mittels einer Materialverjüngung oder Stegausprägungen gebildet. Das Material des Sattelbaumes und der Ansätze umfasst vorteilhafter Weise faserverstärkten Kunststoff. Es sind aber auch andere Materialien mit ausreichender Festigkeit und Flexibilität verwendbar.

### 4. Kurze Beschreibung der begleitenden Figuren

Im Folgenden werden Aspekte der vorliegenden Erfindung unter Bezugnahme auf die begleitenden Figuren genauer erläutert. Diese Figuren zeigen:
- Fig. 1:: eine perspektivische Ansicht eines Sattelbaumes des Standes der Technik;
- Fig. 2:: eine perspektivische Ansicht eines bevorzugten Ausführungsbeispiels der vorliegenden Erfindung;
- Fig. 3 a, b:: Draufsichten von bevorzugten Ausführungsbeispielen eines Sattelbaumes;
- Fig. 4:: eine schematische Ansicht eines bevorzugten Ausführungsbeispiels einer Schwenkeinrichtung;
- Fig. 5:: eine perspektivische Seitenansicht eines weiteren bevorzugten Ausführungsbeispiels der vorliegenden Erfindung;
- Fig. 6:: eine perspektivische Seitenansicht eines weiteren bevorzugten Ausführungsbeispiels der vorliegenden Erfindung;
- Fig. 7:: eine schematische Seitenansicht eines weiteren bevorzugten Ausführungsbeispiels der vorliegenden Erfindung mit einer ersten Ausgestaltung der Begurtung;
- Fig. 8:: eine teilweise schematische Draufansicht eines weiteren bevorzugten Ausführungsbeispiels der vorliegenden Erfindung;
- Fig. 9:: eine schematische Teilansicht eines weiteren bevorzugten Ausführungsbeispiels der vorliegenden Erfindung von unten;
- Fig. 10:: eine perspektivische Seitenansicht eines weiteren bevorzugten Ausführungsbeispiels der vorliegenden Erfindung mit einer zweiten Ausgestaltung der Begurtung;
- Fig. 11:: eine schematische Seitenansicht eines weiteren bevorzugten Ausführungsbeispiels der vorliegenden Erfindung;
- Fig. 12 bis 14:: bevorzugte Ausgestaltungen eines Polsterelementes; und
- Fig. 15 bis 18:: weitere bevorzugte Ausgestaltungen und Befestigungsmöglichkeiten des zumindest einen Polsterelementes.

### 5. Detaillierte Beschreibung bevorzugter Ausführungsbeispiele

Im Folgenden werden gegenwärtig bevorzugte Ausführungsbeispiele der vorliegenden Erfindung anhand der begleitenden Figuren näher erläutert. In den nachfolgenden Figuren werden sogenannte englische Reitsättel beispielhaft erläutert. Der Fachmann erkennt, dass die nachfolgend beschriebenen beispielhaften Ausführungsformen auf jeden anderen Satteltyp angepasst werden können.

Figur 2 zeigt eine perspektivische Seitenansicht eines bevorzugten Ausführungsbeispiels der vorliegenden Erfindung. In Figur 2 ist eine Vorrichtung zum Anbringen an eine Sattelauflage eines Reit- oder Transporttieres gezeigt. Eine Schwenkeinrichtung 61 eines rechten mehrschenkligen Ansatzes 40 und eine Schwenkeinrichtung 63 eines linken mehrschenkligen Ansatzes 50 sind an einem Verbindungssteg 80 befestigt. Die Vorrichtung könnte auch an einer Sattelauflage befestigt werden. Der zweite Schenkelabschnitt 42 des rechten mehrschenkligen Ansatzes 40 umfasst einen Steigbügelriemenhalter 93 und der zweite Schenkelabschnitt 52 des linken mehrschenkligen Ansatzes 50 umfasst einen Steigbügelriemenhalter 94. Zwischen dem zweiten Schenkelabschnitt 42 und dritten Schenkelabschnitt 43 des rechten mehrschenkligen Ansatzes 40 ist eine Schwenkeinrichtung 62 und zwischen dem zweiten Schenkelabschnitt 52 und dritten Schenkelabschnitt 53 des linken mehrschenkligen Ansatzes 50 ist eine Schwenkeinrichtung 64 ausgebildet. Wie aus der Figur 2 ersichtlich, können die Schwenkeinrichtungen 61, 63 sehr nahe am Verbindungssteg 80 befestigt sein. Es kann aber auch jeweils ein Schenkelabschnitt zwischen dem Verbindungssteg 80 und den Schwenkeinrichtungen 61, 63 ausgebildet sein.

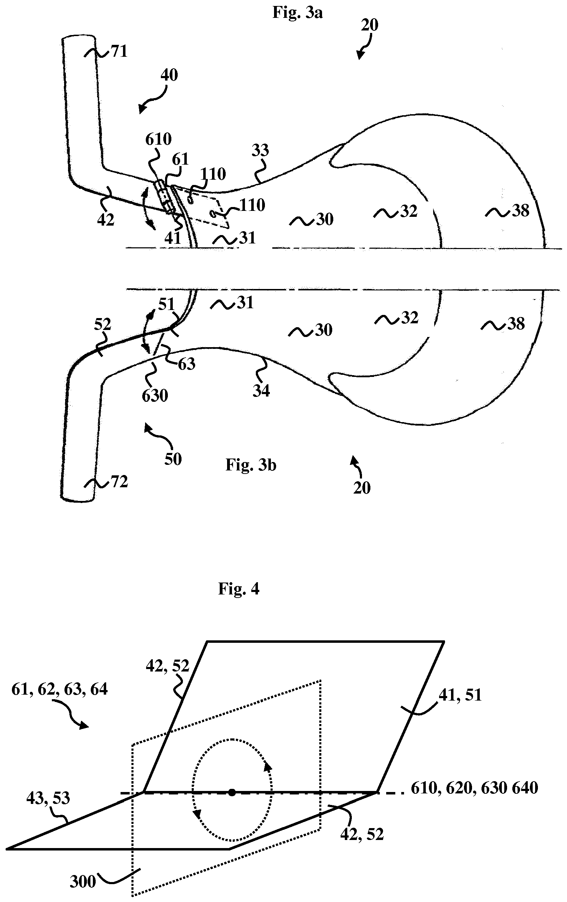

Die Figuren 3a und 3b zeigen Draufsichten eines bevorzugten Ausführungsbeispiels einer an einem Sattelbaum 20 befestigten Vorrichtung. Der Sattelbaum 20 für Reit- oder Transporttiere umfasst einen vorderen Bereich 31, der dem Kopf eines Reit- oder Transporttieres zugewandt ist, eine Sitzfläche 30, einen hinteren Bereich 32 und zwei Seitenbereiche 33, 34. Ein Hinterzwiesel 38 ist im hinteren Bereich 32 ausgebildet. Die Seitenbereiche 33, 34 der Sitzfläche 30 erstrecken sich vom vorderen Bereich 31 zum hinteren Bereich 32 des Sattelbaumes 20. Am vorderen Bereich 31 der Sitzfläche 30 ist im Wesentlichen am Rand des rechten Seitenbereiches 33 ein rechter mehrschenkliger Ansatz 40 und im Wesentlichen am Rand des linken Seitenbereiches 34 ein linker mehrschenkliger Ansatz 50 befestigt. Die Befestigung des Ansatzes 40 an den Rand des Seitenbereiches 33 erfolgt mittels Befestigungselementen 110 wie beispielsweise Schrauben, Nieten und/oder durch Verkleben, wie in Figur 3a gezeigt. In Figur 3b sind der linke mehrschenklige Ansatz 50 und der Sattelbaum 20 aus einem integralen Bauteil ausgebildet. Der rechte mehrschenklige Ansatz 40 hat einen ersten Schenkelabschnitt 41 und einen zweiten Schenkelabschnitt 42. Der linke mehrschenklige Ansatz 50 hat einen ersten Schenkelabschnitt 51 und einen zweiten Schenkelabschnitt 52. Der zweite Schenkelabschnitt 42 des rechten mehrschenkligen Ansatzes 40 und der zweite Schenkelabschnitt 52 des linken mehrschenkligen Ansatzes 50 umfassen Ortsspitzen 71, 72.

Jeder Ansatz 40, 50 umfasst vorteilhafter Weise zumindest eine Schwenkeinrichtung. In den Figuren 3a und 3b ist zwischen den Schenkelabschnitten 41 und 42 des Ansatzes 40 eine Schwenkeinrichtung 61 mit einer Schwenkachse 610 und zwischen den Schenkelabschnitten 51 und 52 des linken mehrschenkligen Ansatzes 50 ist eine Schwenkeinrichtung 63 mit einer Schwenkachse 630 vorgesehen. Die Schwenkachsen 610, 630 der Schwenkeinrichtungen 61, 63 liegen im Wesentlichen in einer Ebene, die von der Längsachse des Sattelbaumes 20 im Wesentlichen rechtwinklig durchdrungen wird. In Figur 3a ist beispielsweise die Schwenkeinrichtung 61 ein Scharnier und in Figur 3b ist die Schwenkeinrichtung 63 beispielsweise ein Filmscharnier, d.h. mittels einer Materialverjüngung gebildet. Wie in Figur 3b zu sehen ist, können der Sattelbaum und die Ansätze aus einem integralen Bauteil gefertigt werden. Jede Schwenkeinrichtung 61, 63, bildet einen Freiheitsgrad im Wesentlichen um seine Schwenkachse aus. Sowohl der Ansatz 40 als auch der Ansatz 50 ermöglichen eine Verschwenkung, wodurch eine verbesserte Anpassung des Sattelbaumes 20 an den Rücken des Reit- oder Transporttieres, insbesondere unabhängig von der Ausgestaltung des Widerrists und der Schulterbereiche des Reit- oder Transporttieres, und eine sichere Fixierung des Sattelbaumes 20 am Rücken des Reit- oder Transporttieres erzielt werden kann. Die Schwenkrichtungen sind in den Figuren 3a und 3b mittels Pfeilen P dargestellt. Wie in Figur 3b zu erkennen, sind die zwei benachbarten Schenkelabschnitte 51 und 52 um die Schwenkachse 630 im Wesentlichen innerhalb einer Schwenkebene, die die Schwenkachse 630 im Wesentlichen vertikal durchdringt, gegeneinander verschwenkbar. Die Angabe im Wesentlichen vertikal umfasst bevorzugter Weise einen Kegelwinkelbereich von 20°.

Der Sattelbaum 20 umfasst kein Kopfeisen und/oder keinen Sattelkopf. Der Sattelbaum 20 kann aus einem beliebigen Material hergestellt sein, welches dazu geeignet ist, insbesondere den Belastungen der Zugkräfte einer Begurtung und den bei Bewegung auftretenden Kraft- und Torsionskomponenten zwischen Reit- oder Transporttier und Reitperson standzuhalten. Beispielsweise können Kunststoffverbindungen wie faserverstärkter oder kohlefaserverstärkter Kunststoff oder Holzkonstruktionen, mit oder ohne Federmetallbesatz, aber auch andere Materialien verwendet werden. Die Ansätze 40, 50 können aus einem beliebigen Material hergestellt sein, welches geeignet ist, insbesondere den Belastungen der Zugkräfte einer Begurtung und den bei Bewegung auftretenden Kraft- und Torsionskomponenten zwischen Reit- oder Transporttier und Reitperson standzuhalten. Beispielsweise umfassen die Ansätze 40, 50 ein Metall, eine Metalllegierung, faserverstärkten oder kohlefaserverstärkten Kunststoff oder dergleichen.

Figur 4 zeigt eine schematische Ansicht, die das Prinzip der Schwenkeinrichtungen erläutert. Zwischen zwei benachbarten Schenkelabschnitten 41, 42; 51, 52; 42, 43; 52, 53 ist eine Schwenkeinrichtung 61; 63; 62; 64 ausgebildet. Die Schwenkeinrichtung 61; 63; 62; 64 umfasst eine Schwenkachse 610; 630; 620; 640. Die Schwenkachse 610; 630; 620; 640 von zwei benachbarten Schenkelabschnitten 41, 42; 51, 52; 42, 43; 52, 53 ist im Wesentlichen innerhalb einer Schwenkebene 300, die die Schwenkachse 610; 630; 620; 640 im Wesentlichen vertikal durchdringt, gegeneinander verschwenkbar. Hierdurch kann einerseits eine bevorzugte Flexibilität des Sattelbaumes erreicht werden, andererseits bleibt durch die Fixierung der Drehebene die erforderliche Stabilität erhalten. Die Angabe im Wesentlichen vertikal umfasst bevorzugter Weise einen Kegelwinkelbereich von 20°.

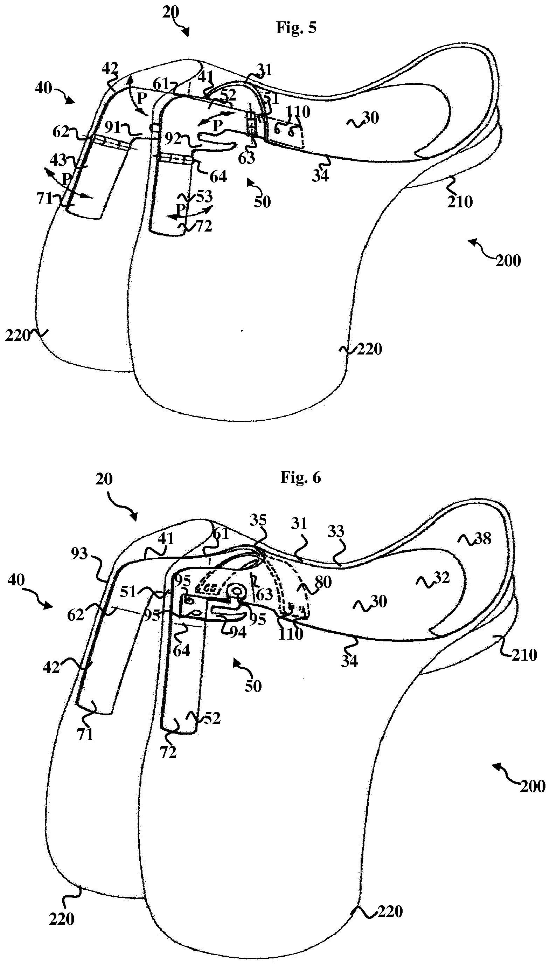

Figur 5 zeigt eine perspektivische Seitenansicht eines weiteren bevorzugten Ausführungsbeispiels der vorliegenden Erfindung. Gleiche Bauteile sind mit gleichen Bezugszeichen versehen. In Figur 5 sind ein Sattelbaum 20 und Teile eines bevorzugten Sattels 200 dargestellt. Der dritte Schenkelabschnitt 43 des rechten mehrschenkligen Ansatzes 40 und der dritte Schenkelabschnitt 53 des linken mehrschenkligen Ansatzes 50 umfassen schwenkbare Ortsspitzen 71, 72. Das Ende des ersten Schenkelabschnitts 41 des rechten mehrschenkligen Ansatzes 40 ist im Wesentlichen am Rand des rechten Seitenbereiches und das Ende des ersten Schenkelabschnitts 51 des linken mehrschenkligen Ansatzes 50 ist im Wesentlichen am Rand des Seitenbereiches 34 mittels Befestigungselementen 110 befestigt. Zwischen dem ersten Schenkelabschnitt 41 und zweiten Schenkelabschnitt 42 des rechten mehrschenkligen Ansatzes 40 ist ein erster Steigbügelriemenhalter 91 bzw. eine erste Sturzfeder und zwischen dem ersten Schenkelabschnitt 51 und zweiten Schenkelabschnitt 52 des linken mehrschenkligen Ansatzes 50 ist ein zweiter Steigbügelriemenhalter 92 bzw. eine zweite Sturzfeder ausgebildet. Der Steigbügelriemenhalter 91, 92 ist ein Sicherheitshaken, in dem Steigbügelriemen eingehängt werden können. Wie in Figur 5 zu sehen, sind der zweite Schenkelabschnitt 42 und der erste Steigbügelriemenhalter 91 und der zweite Schenkelabschnitt 52 und der zweite Steigbügelriemenhalter 92 jeweils aus einem integralen Bauteil hergestellt. Hierdurch wird eine besonders effiziente Konstruktion ohne die Notwendigkeit von weiteren separaten Bauteilen oder Befestigungselementen bereitgestellt. Zwischen dem ersten Schenkelabschnitt 41 und zweiten Schenkelabschnitt 42 und zwischen dem zweiten Schenkelabschnitt 42 und dritten Schenkelabschnitt 43 des rechten mehrschenkligen Ansatzes 40 ist jeweils eine Schwenkeinrichtung 61, 62 ausgebildet. Ebenso ist zwischen dem ersten Schenkelabschnitt 51 und zweiten Schenkelabschnitt 52 und zwischen dem zweiten Schenkelabschnitt 52 und dritten Schenkelabschnitt 53 des linken mehrschenkligen Ansatzes 50 jeweils eine Schwenkeinrichtung 63, 64 ausgebildet. Die Schwenkeinrichtungen 61, 62, 63, 64 ermöglichen eine Verschwenkung der Schenkelabschnitte der Ansätze 40, 50, wodurch eine optimale Anpassung der mehrschenkligen Ansätze an den Rücken des Reit- und Transporttieres erreicht werden kann. Die Schwenkrichtungen sind mittels Pfeilen P angedeutet. In einer bevorzugten Ausführungsform kann der Sattelbaum 20 im vorderen Bereich 31 der Sitzfläche 30 eine Aussparung (nicht dargestellt) aufweisen. Der Fachmann erkennt, dass die Schenkelabschnitte eine beliebige Länge aufweisen können. Insbesondere können die ersten Schenkelabschnitte 41, 51 kürzer ausgestaltet sein als die zweiten 42, 52 und/oder dritten Schenkelabschnitte 43, 53. An der Fläche des Sattelbaumes 20, die dem Rücken eines Reit- oder Transporttieres zugewandt ist, ist zumindest ein Polsterelement 210 befestigt. In einer bevorzugten Ausführungsform sind die Schwenkeinrichtungen 61, 63 nahe an dem vorderen Bereich 31 der Sitzfläche 30 ausgebildet.

Bevorzugter Weise sind am Sattelbaum 20 zwei getrennte Polsterelemente 210 ausgebildet (in Figur 5 nicht gezeigt). In Figur 5 ist eine Untertasche 220 dargestellt. Der Sattelbaum 20 kann zudem beispielsweise zumindest einen Verbindungssteg zwischen dem ersten Schenkelabschnitt 41 des rechten mehrschenkligen Ansatzes 40 und dem ersten Schenkelabschnitt 51 des linken mehrschenkligen Ansatzes 50 umfassen, der aber in Figur 5 nicht gezeigt ist.

Figur 6 zeigt eine perspektivische Seitenansicht eines weiteren bevorzugten Ausführungsbeispiels der vorliegenden Erfindung. Gleiche Bauteile sind mit gleichen Bezugszeichen versehen. In Figur 6 sind ein Sattelbaum 20 und Teile eines bevorzugten Sattels 200 dargestellt. Der Sattelbaum 20 umfasst eine Sitzfläche 30, einen vorderen Bereich 31, einen hinteren Bereich 32 mit einer Hinterzwiesel 38 und zwei Seitenbereiche 33, 34. Zwischen dem ersten Schenkelabschnitt 41 und zweiten Schenkelabschnitt 42 und zwischen dem zweiten Schenkelabschnitt 42 und dritten Schenkelabschnitt 43 des rechten mehrschenkligen Ansatzes 40 ist jeweils eine Schwenkeinrichtung 61, 62 ausgebildet. Ferner ist zwischen dem ersten Schenkelabschnitt 51 und zweiten Schenkelabschnitt 52 und zwischen dem zweiten Schenkelabschnitt 52 und dritten Schenkelabschnitt 53 des linken mehrschenkligen Ansatzes 50 jeweils eine Schwenkeinrichtung 63, 64 ausgebildet. Die Schwenkeinrichtungen 61, 62, 63, 64 sind mittels einer Materialverjüngung gebildet. Der Fachmann erkennt, dass die Schwenkeinrichtungen 61, 62, 63, 64 auch ein Scharnier oder eine Gelenkverbindung umfassen können. Im vorderen Bereich 31 der Sitzfläche 30 weist der Sattelbaum 20 eine Aussparung 35 auf, um eine verbesserte Beweglichkeit der Rückenmuskulatur und eine Schonung des Rückens des Reit- oder Transporttieres bereitzustellen. Das Ende des Schenkelabschnitts 41 des rechten Ansatzes 40 ist im Wesentlichen am Rand des Seitenbereiches 33 und das Ende des Schenkelabschnitts 51 des linken Ansatzes 50 ist im Wesentlichen am Rand des Seitenbereiches 34 mittels Befestigungselementen befestigt. Als Befestigungselemente werden beispielsweise Schrauben, Nieten und/oder Klebemittel verwendet. Die Enden der Schenkelabschnitte 41, 51 der Ansätze 40, 50 sind mit einem Verbindungssteg 80 mittels Befestigungselementen 110 wie Schrauben, Nieten, Schweißen oder dergleichen verbunden. Der Verbindungssteg 80 ist gebogen und weist im Wesentlichen die Form bzw. Biegung des Sattelbaumes 20 auf. Der Verbindungssteg 80 ist hinter der Aussparung 35 ausgebildet. In einer weiteren bevorzugten Ausführungsform ist der Verbindungssteg 80 und die Ansätze 40, 50 aus einem integralen Bauteil ausgebildet (in Figur 6 nicht dargestellt). Ein erster Steigbügelriemenhalter 93 (in Figur 6 nicht zu sehen) ist am rechten mehrschenkligen Ansatz 40 und ein zweiter Steigbügelriemenhalter 94 ist am linken mehrschenkligen Ansatz 50 mittels Befestigungsmitteln 95 befestigt. Insbesondere eine Sitzauflage, die oberhalb der Sitzfläche ausgebildet ist, oder ein oberes Sattelblatt sind in der Figur 6 nicht dargestellt. In Figur 6 ist eine Untertasche 220 dargestellt und das zumindest eine Polsterelement 210 angedeutet.

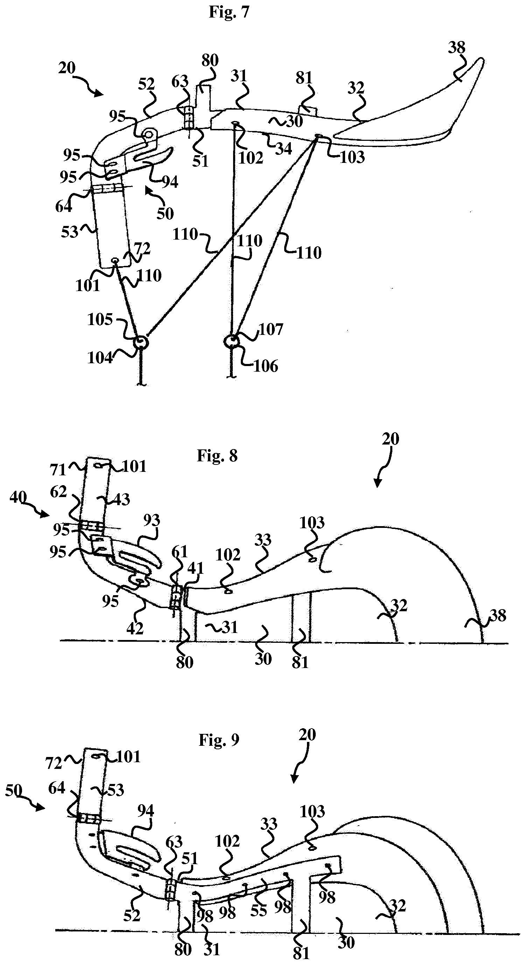

In Figur 7 ist eine schematische Seitenansicht eines bevorzugten Ausführungsbeispiels der vorliegenden Erfindung mit einer ersten Ausgestaltung der Begurtung dargestellt. Gleiche Bauteile sind mit gleichen Bezugszeichen versehen. In der Figur 7 ist der Sattelbaum 20, an dem der linke mehrschenklige Ansatz 50 befestigt ist, zu sehen. Im hinteren Bereich 32 der Sitzfläche 30 ist das Hinterzwiesel 38 ausgebildet. Zwischen dem ersten Schenkelabschnitt 51 und zweiten Schenkelabschnitt 52 und zwischen dem zweiten Schenkelabschnitt 52 und dritten Schenkelabschnitt 53 des linken mehrschenkligen Ansatzes 50 ist jeweils eine Schwenkeinrichtung 63, 64 ausgebildet. Die Schwenkeinrichtungen 63, 64 sind Scharniere. In einer weiteren bevorzugten Ausgestaltung können die Schwenkeinrichtungen 63, 64 auch mittels einer Materialverjüngung gebildet sein. Der Steigbügelriemenhalter 94 ist am Ansatz 50 mittels Befestigungsmitteln 95 fixiert. Eine erste Gurtbefestigungseinrichtung 101 ist im Schenkelabschnitt 53, im Bereich der Ortsspitze 72, ausgebildet. Eine zweite Gurtbefestigungseinrichtung 102 ist im Wesentlichen im vorderen Bereich 31 des Seitenbereiches 34 und eine dritte Gurtbefestigungseinrichtung 103 ist im Wesentlichen im hinteren Bereich 32 des Seitenbereiches 34 ausgebildet. Ein Ende eines Gurtes 112 ist an der ersten Gurtbefestigungseinrichtung 101 befestigt. Der Gurt 112 wird durch eine Öffnung 105 eines ersten Bügels 104 geführt und an der dritten Gurtbefestigungseinrichtung 103 befestigt. Von der dritten Gurtbefestigungseinrichtung 103 wird der Gurt 112 durch eine Öffnung 107 eines zweiten Bügels 106 geführt und an der zweiten Gurtbefestigungseinrichtung 102 befestigt. Derselbe Gurt 112, der von der ersten 101 zur dritten Gurtbefestigungseinrichtung 103 geführt wird, kann nach der Befestigung am hinteren Bereich 32 des Seitenbereiches 34 weitergeführt werden. Alternativ kann ein Gurt von der ersten 101 zur dritten Gurtbefestigungseinrichtung 103 und ein weiterer Gurt von der dritten 103 zur zweiten Gurtbefestigungseinrichtung 102 geführt werden. Die Öffnungen 105 können insbesondere eine schlitzartige oder runde Ausgestaltung umfassen. Die in Figur 7 angedeuteten Positionen der Gurtbefestigungseinrichtungen 102 und 103 sind beispielhaft. Die beiden Gurtbefestigungseinrichtungen 102 und 103 befinden sich im Wesentlichen am Rand des Seitenbereiches 34.

In den Figuren 2 bis 6 sind die Gurtbefestigungseinrichtungen 101, 102, 103 nicht dargestellt. Der Fachmann erkennt, dass diese Ausführungsformen eine entsprechende Begurtung aufweisen.

Figur 8 zeigt eine schematische Teil-Draufansicht eines fünften bevorzugten Ausführungsbeispiels der vorliegenden Erfindung. Gleiche Bauteile sind mit gleichen Bezugszeichen versehen. In der Figur 8 ist eine Hälfte des Sattelbaumes 20, an dem der rechte mehrschenklige Ansatz 40 befestigt ist, zu sehen. Die Sitzfläche 30 umfasst im hinteren Bereich 32 das Hinterzwiesel 38. Zwischen dem ersten Schenkelabschnitt 41 und zweiten Schenkelabschnitt 42 und zwischen dem zweiten Schenkelabschnitt 42 und dritten Schenkelabschnitt 43 des rechten mehrschenkligen Ansatzes 40 ist jeweils eine Schwenkeinrichtung 61, 62 ausgebildet. Die Schwenkeinrichtungen 61, 62 sind Scharniere. In einer bevorzugten Ausgestaltung können die Schwenkeinrichtungen 61, 62 auch Filmgelenke bzw. Filmscharniere umfassen, die mittels einer Materialverjüngung gebildet sind. Der Steigbügelriemenhalter 93 ist am Ansatz 40 mittels Befestigungsmittel 95 fixiert. Eine erste Gurtbefestigungseinrichtung 101 ist im dritten Schenkelabschnitt 43, im Bereich der Ortsspitze 71, ausgebildet. Eine zweite Gurtbefestigungseinrichtung 102 ist im Wesentlichen im vorderen Bereich 31 des Seitenbereiches 33 und eine dritte Gurtbefestigungseinrichtung 103 ist im Wesentlichen im hinteren Bereich 32 des Seitenbereiches 33 ausgebildet. Die in Figur 8 angedeuteten Positionen der Gurtbefestigungseinrichtungen 102 und 103 sind beispielhaft. Die beiden Gurtbefestigungseinrichtungen 102 und 103 befinden sich im Wesentlichen am Rand des Seitenbereiches 33. Zwischen dem rechten Ansatz 40 und dem linken Ansatz 50 (in Figur 8 nicht dargestellt) sind zwei Verbindungsstege 80, 81 ausgebildet. Der erste Verbindungssteg 80 befindet sich im Wesentlichen im vorderen Bereich 31 und der zweite Verbindungssteg befindet sich im Wesentlichen im mittleren oder hinteren Bereich 32 der Sitzfläche 30.

Figur 9 ist eine schematische Teilansicht eines weiteren bevorzugten Ausführungsbeispiels der vorliegenden Erfindung, wobei gleiche Bauteile mit gleichen Bezugszeichen versehen sind. Die teilweise schematische Ansicht zeigt die Hälfte des Sattelbaumes 20 von unten. In Figur 9 sind der Sattelbaum 20 und der linke mehrschenklige Ansatz 50 gezeigt. Der linke mehrschenklige Ansatz 50 umfasst den ersten Schenkelabschnitt 51, den zweiten Schenkelabschnitt 52 und den dritten Schenkelabschnitt 53. Der Steigbügelriemenhalter 94 ist am Ansatz 50 mittels Befestigungsmittel 95 befestigt. Zwischen dem ersten Schenkelabschnitt 51 und zweiten Schenkelabschnitt 52 und zwischen dem zweiten Schenkelabschnitt 52 und dritten Schenkelabschnitt 53 des linken mehrschenkligen Ansatzes 50 ist jeweils eine Schwenkeinrichtung 63, 64 ausgebildet. Die Schwenkeinrichtungen 63, 64 sind Scharniere oder Gelenkverbindungen. Der Fachmann erkennt, dass die Schwenkeinrichtungen 63, 64 auch mittels einer Materialverjüngung gebildet werden können. Der erste Schenkelabschnitt 51 des linken mehrschenkligen Ansatzes 50 ist zumindest teilweise bis zum hinteren Bereich 32 der Sitzfläche 30 ausgebildet. Der in Figur 9 nicht dargestellte erste Schenkelabschnitt 41 des rechten mehrschenkligen Ansatzes 40 ist ebenfalls zumindest teilweise bis zum hinteren Bereich 32 der Sitzfläche 30 ausgebildet. Der erste Schenkelabschnitt 41 und der erste Schenkelabschnitt 51 bilden verlängerte Längsstreben 55. Die Längsstreben 55 sind mittels Befestigungsmittel 98 am Sattelbaum 20 fixiert. Zwischen dem rechten Ansatz 40 (in Figur 9 nicht dargestellt) und dem linken Ansatz 50 sind zwei Verbindungsstege 80, 81 ausgebildet. Der erste Verbindungssteg 80 befindet sich im Wesentlichen im vorderen Bereich 31 und der zweite Verbindungssteg 81 befindet sich im Wesentlichen im mittleren oder hinteren Bereich 32. Die beiden Verbindungsstege 80, 81 weisen eine Krümmung auf. Die Längsstreben 55 und die Verbindungsstege 80, 81 können aus einem integralen Bauteil gebildet sein. Eine erste Gurtbefestigungseinrichtung 101 ist im dritten Schenkelabschnitt 53, im Bereich der Ortsspitze 72, ausgebildet. Eine zweite Gurtbefestigungseinrichtung 102 ist im Wesentlichen im vorderen Bereich 31 des Seitenbereiches 33 und eine dritte Gurtbefestigungseinrichtung 103 ist im Wesentlichen im hinteren Bereich 32 des Seitenbereiches 33 ausgebildet. In einer bevorzugten Ausführungsform, die nicht dargestellt ist, sind die Schenkel der Ansätze, die Längsstreben und die Verbindungsstege aus einem integralen Bauteil und die Schwenkeinrichtungen mittels Materialverjüngungen ausgebildet.

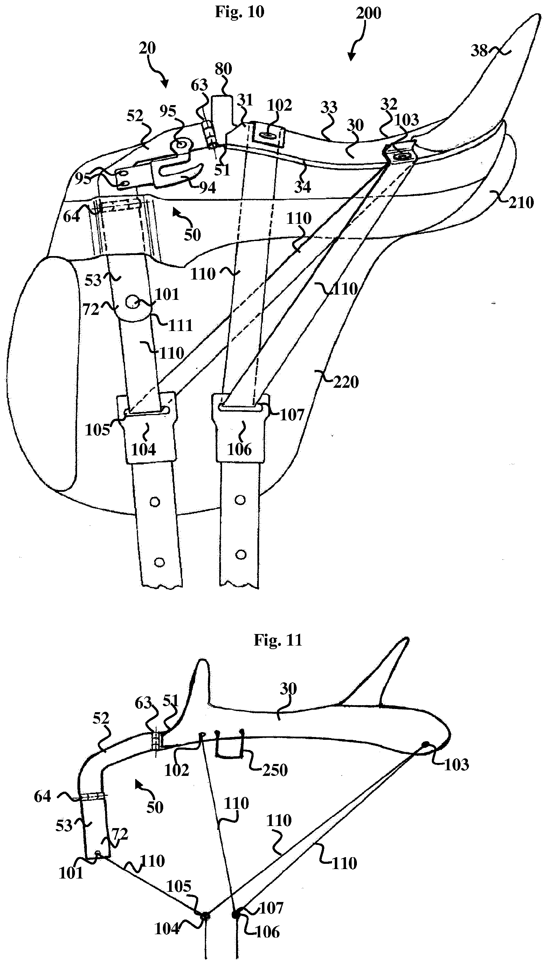

In Figur 10 ist eine perspektivische Seitenansicht eines weiteren bevorzugten Ausführungsbeispiels der vorliegenden Erfindung mit einer zweiten Ausgestaltung der Begurtung dargestellt. Gleiche Bauteile sind mit gleichen Bezugszeichen versehen. Figur 10 zeigt einen Sattel 200 mit einem Sattelbaum 20. Der Sattelbaum 20 umfasst die Sitzfläche 30, den vorderen Bereich 31, den hinteren Bereich 32 mit dem Hinterzwiesel 38 und die Seitenbereiche 33, 34. Die Schwenkeinrichtung 63 ist zwischen dem ersten Schenkelabschnitt 51 und zweiten Schenkelabschnitt 52 und die Schwenkeinrichtung 64 ist zwischen dem zweiten Schenkelabschnitt 52 und dritten Schenkelabschnitt 53 des linken mehrschenkligen Ansatzes 50 ausgebildet. Die Schwenkeinrichtungen 63, 64 sind Scharniere. In einer weiteren bevorzugten Ausgestaltung können die Schwenkeinrichtungen 63, 64 auch mittels einer Materialverjüngung gebildet sein. Der Steigbügelriemenhalter 94 ist am Ansatz 50 mittels Befestigungsmitteln 95 fixiert. Eine erste Gurtbefestigungseinrichtung 101 ist am Schenkelabschnitt 53, im Bereich der Ortsspitze 72, befestigt. Eine zweite Gurtbefestigungseinrichtung 102 ist im Wesentlichen im vorderen Bereich 31 des Seitenbereiches 34 und eine dritte Gurtbefestigungseinrichtung 103 ist im Wesentlichen im hinteren Bereich 32 des Seitenbereiches 34 befestigt. Ein Ende 111 eines Gurtes 112 ist an der ersten Gurtbefestigungseinrichtung 101 befestigbar, der Gurt 112 ist durch eine Öffnung 105 eines ersten Bügels 104 führbar und an der dritten Gurtbefestigungseinrichtung 103 befestigbar. Anschließend ist der Gurt 112 von der dritten Gurtbefestigungseinrichtung 103 durch eine Öffnung 107 eines zweiten Bügels 106 und durch eine Membran des Sattelbaumes 20 führbar und ist an der zweiten Gurtbefestigungseinrichtung 102 befestigbar.

Bei einer alternativen Gurtbefestigung ist das Ende 111 des Gurtes 112 an der ersten Gurtbefestigungseinrichtung 101 befestigt. Der Gurt 110 wird durch eine Öffnung 105 eines ersten Bügels 104 geführt und an der dritten Gurtbefestigungseinrichtung 103 befestigt. Von der dritten Gurtbefestigungseinrichtung 103 wird der Gurt 112 durch eine Öffnung 107 eines zweiten Bügels 106 geführt und an der zweiten Gurtbefestigungseinrichtung 102 befestigt.

Die Begurtung kann durch denselben Gurt 112 erfolgen. Alternativ kann für die Verbindung von der ersten Gurtbefestigungseinrichtung 101 zur dritten Gurtbefestigungseinrichtung 103 und für die Verbindung von der dritten Gurtbefestigungseinrichtung 103 zur zweiten Gurtbefestigungseinrichtung 102 ein separater Gurt 112 verwendet werden. Die Öffnungen 105, 107 sind schlitzartig ausgebildet. Der Fachmann erkennt, dass auch eine Gurtführung von der ersten 101 zur zweiten 102, und von der zweiten 102 zur dritten Gurtbefestigungseinrichtung 103 möglich ist.

Die in Figur 10 angedeuteten Positionen der Gurtbefestigungseinrichtungen 102 und 103 befinden sich im Wesentlichen am Rand des Seitenbereiches 34. Eine oberhalb der Sitzfläche ausgebildete Sitzauflage ist in der Figur 10 nicht dargestellt. Der Sattel 200 umfasst zumindest ein Polsterelement 210 und eine Untertasche 220. Bevorzugter Weise erfolgt die Fixierung des Sattels 200 hinter den Schulterblättern des Reit- oder Transporttieres flexibel über den Zug der Begurtung.

Figur 11 zeigt eine schematische Seitenansicht eines weiteren bevorzugten Ausführungsbeispiels der vorliegenden Erfindung. Gleiche Bauteile sind mit gleichen Bezugszeichen versehen. In Figur 11 ist ein Bocksattel 200 dargestellt, an dem eine erfindungsgemäße Vorrichtung angebracht ist. Der Bocksattel 200 hat eine längere Auflage- bzw. Sitzfläche 30 wie beispielsweise ein Dressursattel. Ein Sattelkopf und/oder ein Kopfeisen sind nicht vorgesehen. An der Sitzfläche 30 ist ein Steigbügelhalter 250 befestigt. Der Fachmann erkennt, dass die erfindungsgemäße Vorrichtung an verschiedene Satteltypen angebracht werden kann.

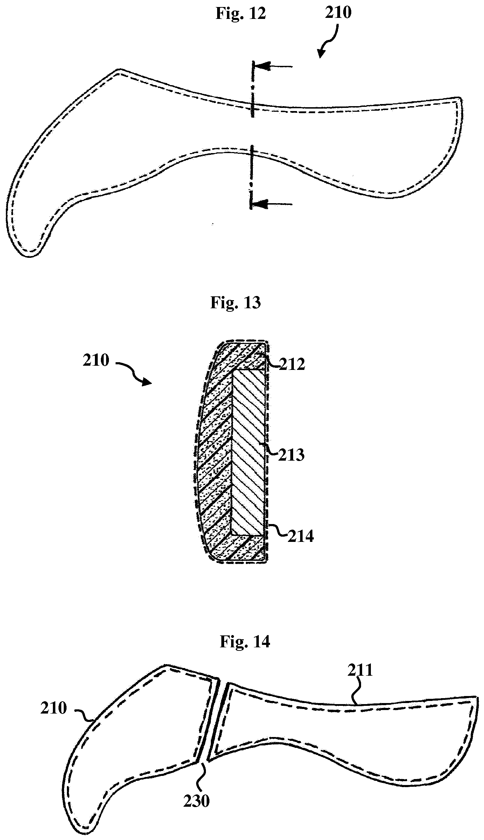

In den Figuren 12 bis 14 ist ein Polsterelement 210 bzw. Sattelkissen, das an der Unterseite eines Sattelbaums befestigbar ist, gezeigt. Als Unterseite des Sattelbaumes versteht man die dem Pferderücken eines Reit- und Transporttieres zugewandte Seite. Das Polsterelement 210 umfasst einen Formkern 212 bzw. eine Polsterung. Wie in Figur 13 gezeigt, weist der Formkern 212 im Querschnitt im Wesentlichen eine U-Form auf. Zwischen den Schenkeln des Formkerns 212 ist die Einlage 213 gebildet. Der Formkern 212 und die Einlage 213 werden von einem Überzug 214, beispielsweise einem Lederüberzug, umschlossen. Die Einlage 213 und der Formkern 212 sind aus einem Material, auf dem der Überzug 214 angebracht werden kann. Beispielsweise umfasst die Einlage 213 Filz oder Baumwolle, auf dem der Lederüberzug angeheftet werden kann. Auf einen Sattelbaum werden bevorzugter Weise zwei Polsterelemente 210 angebracht, wobei ein Polsterelement im Wesentlichen links und ein weiteres Polsterelement 210 im Wesentlichen rechts vom Widerrist eines Reit- oder Transporttieres positionierbar ist. Durch die Bereitstellung von zwei Polsterelementen kann eine verbesserte Auflage des Sattelbaums sowie des Sattels auf dem Rücken eines Reit- oder Transporttieres erreicht werden.

In einer bevorzugten Ausführungsform sind am Sattelbaum vier getrennte Polsterelemente 210, 211 befestigbar. In Figur 14 sind beispielhaft zwei Polsterelemente 210, 211 dargestellt, die auf einer Seite des Sattelbaums anbringbar sind und ein weiteres Paar von in Figur 14 dargestellten Polsterelementen sind auf der anderen Seite des Sattelbaums anbringbar. In einer weiteren Ausführungsform kann das in Figur 14 dargestellte Polsterelement 210 eine Dehnungsfuge aufweisen, die in Figur 14 mit dem Bezugszeichen 230 angedeutet ist.

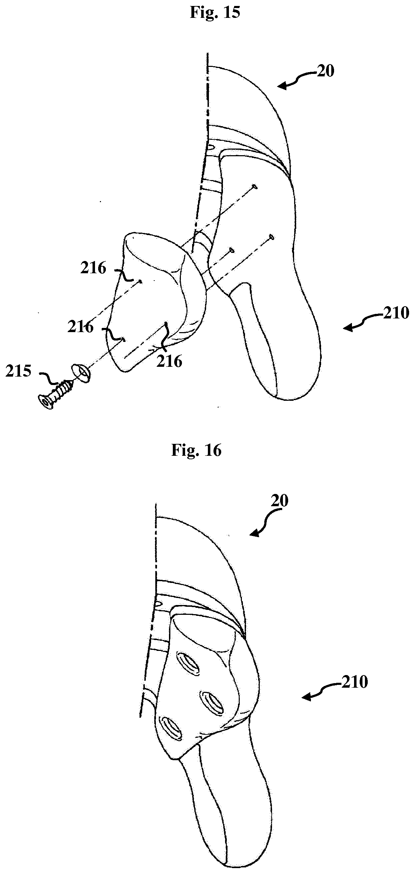

In den Figuren 15 bis 18 sind bevorzugte Befestigungseinrichtungen des zumindest einen Polsterelementes 210 dargestellt. Das zumindest eine Polsterelement 210 kann mittels Befestigungselementen 215 wie beispielsweise Schrauben und durch Nieten am Sattelbaum 20 befestigt werden. In den Figuren 15 und 16 ist beispielhaft ein Schraubelement 215 dargestellt. Am zumindest einen Polsterelement 210 können Durchtrittsöffnungen 216 ausgebildet sein, um die Befestigung zu erleichtern.

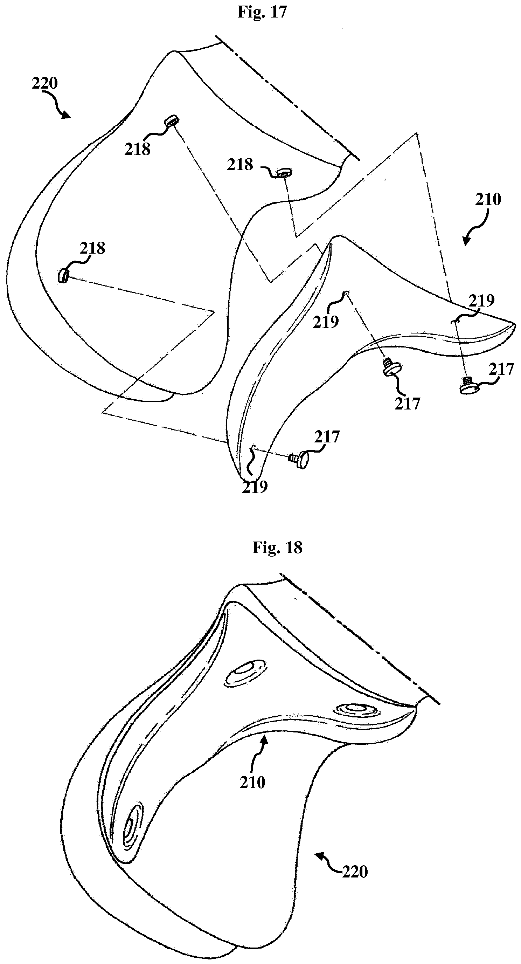

In den Figuren 17 und 18 sind alternative Befestigungselemente gezeigt. Das zumindest eine Polsterelement 210 ist mittels Druckknopfelementen 217, 218 an eine Untertasche 220 anbringbar. Die Druckknopfelemente 217, 218 sind Verschlusselemente, die zwei Teile umfassen, von denen ein Teil 218 mit einer Vertiefung und das andere Teil 217 mit einem passenden Kopf versehen ist. Zum Befestigen werden die beiden Teile ineinander gedrückt. In das zumindest eine Polsterelement 210 können Durchtrittsöffnungen 219 ausgebildet sein, um die Befestigung zu erleichtern. Die Teile 218 mit der Vertiefung können beispielsweise an der Untertasche 220 angebracht werden und die Teile 217 mit dem passenden Kopf werden durch die Durchtrittsöffnungen 219 geführt und mit den Teilen 218 ineinander gedrückt.

Der Fachmann erkennt, dass Kombinationen von bevorzugten Ausführungsformen möglich sind. Beispielsweise kann der linke mehrschenklige Ansatz ein Scharnier und eine Materialverjüngung als Schwenkeinrichtungen aufweisen und der rechte mehrschenklige Ansatz kann ein Scharnier und eine Materialverjüngung aufweisen. Weiterhin können auch zwei oder mehr Verbindungsstege zwischen den ersten Schenkelabschnitten der Ansätze ausgebildet sein. In den beispielhaften Figuren wurde eine oder zwei Schwenkeinrichtungen pro Ansatz beschrieben. Es können auch drei oder mehr Schwenkeinrichtungen zwischen den jeweiligen Schenkelabschnitten der Ansätze ausgebildet sein. In den Figuren ist insbesondere der sogenannte englische Reitsattel in bevorzugten Ausführungsformen dargestellt. Der Fachmann erkennt, dass die erfindungsgemäße Vorrichtung auf andere Satteltypen wie beispielsweise Transportsättel, Westernsättel mit und ohne Horn, Stocksättel mit und ohne Horn, baumlose Sättel, Treckingsättel, Distanzsättel, Barocksättel, iberische Sättel, Wanderreitsättel oder Damensättel anbringbar ist.

## Patentansprüche

1. Vorrichtung für eine Sitzauflage eines Reit- oder Transporttieres, umfassend einen rechten mehrschenkligen Ansatz (40) mit einem ersten Schenkelabschnitt (41) und einem zweiten Schenkelabschnitt (42) und einen linken mehrschenkligen Ansatz (50) mit einem ersten Schenkelabschnitt (51) und einem zweiten Schenkelabschnitt (52), wobei der rechte mehrschenklige Ansatz (40) einen dritten Schenkelabschnitt (43) und der linke mehrschenklige Ansatz (50) einen dritten Schenkelabschnitt (53) umfasst, wobei zwischen zwei benachbarten Schenkelabschnitten (41, 42, 43, 51, 52, 53) jeweils eine Schwenkeinrichtung (61, 62, 63, 64) mit einer Schwenkachse (610, 620, 630, 640) ausgebildet ist, um die zwei benachbarte Schenkelabschnitte (41, 42, 43, 51, 52, 53) im Wesentlichen innerhalb einer Schwenkebene (300), welche die Schwenkachse (610, 620, 630, 640) im Wesentlichen vertikal durchdringt, gegeneinander verschwenkbar sind, **dadurch gekennzeichnet, dass** die Schwenkeinrichtungen (61, 62, 63, 64) derart angeordnet sind, dass die Schwenkebene (300) wenigstens einer der Schwenkeinrichtungen (61, 62, 63, 64) im Wesentlichen in Längsrichtung verschwenkbar ist.

2. Vorrichtung nach Anspruch 1, **dadurch gekennzeichnet, dass** der rechte mehrschenklige Ansatz (40) wenigsten einen weiteren Schenkelabschnitt (4n) und der linke mehrschenklige Ansatz (50) wenigstens einen weiteren Schenkelabschnitt (5n) umfasst, wobei zwischen zwei benachbarten Schenkelabschnitten (43, 4n, 52, 5n) jeweils eine weitere Schwenkeinrichtung (6n) mit einer Schwenkachse (6n0) ausgebildet ist, um die zwei benachbarte Schenkelabschnitte (43, 4n, 53, 5n) im Wesentlichen innerhalb einer Schwenkebene (300), welche die Schwenkachse (6n0) im Wesentlichen vertikal durchdringt, gegeneinander verschwenkbar sind.

3. Vorrichtung nach einem der vorherigen Ansprüche, **dadurch gekennzeichnet, dass** wenigstens eine Schwenkeinrichtung (61, 62, 62, 64) ein Scharnier oder eine Gelenkverbindung umfasst.

4. Vorrichtung nach Anspruch 1 oder 2, **dadurch gekennzeichnet, dass** wenigstens eine Schwenkeinrichtung (61, 62, 62, 64) mittels einer Materialverjüngung gebildet ist.

5. Vorrichtung nach Anspruch 1 oder 2, **dadurch gekennzeichnet, dass** wenigstens eine Schwenkeinrichtung (61, 62, 62, 64) aus einem teilweise flexiblen Gewebeelement gebildet ist.

6. Vorrichtung nach einem der vorherigen Ansprüche, **dadurch gekennzeichnet, dass** der erste Schenkelabschnitt (41) des rechten mehrschenkligen Ansatzes (40) und der erste Schenkelabschnitt (51) des linken mehrschenkligen Ansatzes (50) sich jeweils zumindest teilweise bis zum hinteren Bereich der Sitzauflage erstrecken.

7. Vorrichtung nach einem der vorherigen Ansprüche, **dadurch gekennzeichnet, dass** zwischen dem ersten Schenkelabschnitt (41) und dem ersten Schenkelabschnitt (51) der mehrschenkligen Ansätze (40, 50) zumindest ein Verbindungssteg (80) ausgebildet ist.

8. Vorrichtung nach einem der vorherigen Ansprüche, **dadurch gekennzeichnet, dass** der rechte (40) und der linke mehrschenklige Ansatz (50) jeweils im Wesentlichen im Bereich von Ortsspitzen (71, 72) eine erste Gurtbefestigungseinrichtung (101), jeweils im Wesentlichen im vorderen Bereich der Sitzauflage eine zweite Gurtbefestigungseinrichtung (102) und jeweils im Wesentlichen im hinteren Bereich der Sitzauflage eine dritte Gurtbefestigungseinrichtung (103) umfassen.

9. Vorrichtung nach Anspruch 8, **dadurch gekennzeichnet, dass** ein Ende (111) eines Gurtes (110) an der ersten Gurtbefestigungseinrichtung (101) befestigbar ist, der Gurt (110) durch eine Öffnung (105) eines ersten Bügels (104) führbar und an der dritten Gurtbefestigungseinrichtung (103) befestigbar ist, der Gurt (110) von der dritten Gurtbefestigungseinrichtung (103) durch eine Öffnung (107) eines zweiten Bügels (106) führbar und an der zweiten Gurtbefestigungseinrichtung (102) befestigbar ist.

10. Vorrichtung nach einem der vorherigen Ansprüche, **dadurch gekennzeichnet, dass** die Vorrichtung keinen Sattelkopf und/oder kein Kopfeisen umfasst.

11. Sattelbaum (20) für Reit- und Transporttiere umfassend
eine Sitzfläche (30), die einen dem Kopf eines Reit- oder Transporttieres zugewandten vorderen Bereich (31), einen hinteren Bereich (32) und zwei Seitenbereiche (33, 34) aufweist, und
eine am Sattelbaum (20) befestigbare Vorrichtung nach einem der Ansprüche 1 bis 10.

12. Sattelbaum (20) nach Anspruch 11, **dadurch gekennzeichnet, dass** im vorderen Bereich (31) der Sitzfläche (30) eine Aussparung (35) ausgebildet ist.

13. Sattel (200) zur Auflage auf den Rücken eines Reit- oder Transporttieres, umfassend eine Sitzauflage, **gekennzeichnet durch**
eine Vorrichtung nach einem der Ansprüche 1 bis 10 und
zumindest ein an der Unterseite der Sitzauflage befestigbares Polsterelement (210).

14. Sattel nach Anspruch 13, **dadurch gekennzeichnet, dass** zweite getrennt ausgebildete Polsterelemente (210, 211) an der Unterseite der Sitzfläche (30) befestigbar sind.

## Claims

1. A seat support device for a riding animal or a pack animal, comprising:
a right multi-linked lug arrangement (40) with a first link-section (41) and a second link-section (42) and a left multi-linked lug arrangement (50) with a first link-section (51) and a second link-section (52), wherein the right multi-linked lug arrangement (40) has a third link-section (43) and the left multi-linked lug arrangement (50) has a third link-section (53), wherein in each case a pivoting device (61, 62, 63, 64) having a pivot axis (610, 620, 630, 640) is provided between two adjacent link-sections (41, 42, 43, 51, 52, 53) to pivot two adjacent link-sections (41, 42, 43, 51, 52, 53) towards each other within a pivot plane (300) which penetrates the pivot axis (610, 620, 630, 640) substantially perpendicularly, **characterized in that** the pivoting devices (61, 62, 63, 64) are arranged such that the pivot plane (300) of at least one of the pivoting devices (61, 62, 63, 64) is substantially pivotable in longitudinal direction.

2. The seat support device according to claim 1, **characterized in that** the right multi-linked lug arrangement (40) has at least a further link-section (4n) and the left multi-linked lug arrangement (50) has at least a further link-section (5n), wherein a further pivoting device (6n) with a pivot axis (6n0) is formed between two adjacent link-sections (43, 4n, 53, 5n) respectively, to pivot the two adjacent link-sections (43, 4n, 53, 5n) towards one other around the pivot axis (6n0) substantially within a pivot plane (300) which penetrates the pivot axis (6n0) substantially perpendicularly.

3. The seat support device according to one of the preceding claims, **characterized in that** at least one pivoting device (61, 62, 63, 64) comprises a hinge or a joint.

4. The seat support device according to claim 1 or 2, **characterized in that** at least one pivoting device (61, 62, 63, 64) is formed by tapering of material.

5. The seat support device according to claim 1 or 2, **characterized in that** at least one pivoting device (61, 62, 63, 64) is formed by a partly flexible tissue element.

6. The seat support device according to one of the preceding claims, **characterized in that** the first link-section (41) of the right multi-linked lug arrangement (40) and the first link-section (51) of the left multi-linked lug arrangement (50) respectively extends at least partly to the back area of the seat support.

7. The seat support device according to one of the preceding claims, **characterized in that** at least one connection element (80) is arranged between the first link-section (41) and the first link-section (51) of the multi-linked lug arrangements (40, 50).

8. The seat support device according to one of the preceding claims, **characterized in that** the right multi-linked lug arrangement (40) and the left multi-linked lug arrangement (50) respectively comprise a first belt fastening device (101) substantially in the area of the free ends (71, 72), a second belt fastening device (102) substantially in the front area of the seat support, and a third belt fastening device (103) substantially in the back area of the seat support.

9. The seat support device according to claim 8, wherein an end (111) of a belt (110) is attachable to the first belt fastening device (101), the belt (110) is guidable through an opening (105) of a first strap (104) and is attachable to the third belt fastening device (103), the belt (110) is guidable from the third belt fastening device (103) through an opening (107) of a second strap (106) and is attachable to the second belt fastening device (102).

10. The seat support device according to one of the preceding claims, **characterized in that** the device does not comprise a saddle head and/or a gullet plate.

11. A saddle tree (20) suitable for a riding animal or a pack animal comprising:
a seat (30) having a front area (31) facing to the head of a riding animal or a pack animal, a back area (32), and two side areas (33, 34); and
a seat support device according to one of the claims 1 to 10 attachable to the saddle tree (20).

12. The saddle tree (20) according to claim 11, **characterized in that** a recess (35) is arranged in the front area (31) of the seat (30).

13. A saddle (200) applied on the back of a riding animal or a pack animal comprising a seat support **characterized in that** the saddle comprises:
a seat support device according to one of the claims 1 to 10 and
at least one cushion element (210) is attachable to the bottom of the seat support.

14. The saddle according to claim 13, wherein two separately formed cushion elements (210, 211) are attachable to the bottom of the seat (30).

## Revendications

1. Dispositif pour un revêtement d'assise d'une monture ou d'un animal de transport, comportant
un appui droit (40) à plusieurs branches, comprenant une première partie de branche (41) et une seconde partie de branche (42), et un appui gauche (50) à plusieurs branches, comprenant une première partie de branche (51) et une seconde partie de branche (52), dans lequel l'appui droit (40) à plusieurs branches comprend une troisième partie de branche (43) et l'appui gauche (50) à plusieurs branches comprend une troisième partie de branche (53), et entre deux parties de branche voisines (41, 42, 43, 51, 52, 53) est réalisé un moyen de pivotement respectif (61, 62, 63, 64) présentant un axe de pivotement (610, 620, 630, 640) autour duquel deux parties de branche voisines (41, 42, 43, 51, 52, 53) sont susceptibles de pivoter l'une par rapport à l'autre sensiblement à l'intérieur d'un plan de pivotement (300) que traverse sensiblement verticalement l'axe de pivotement (610, 620, 630, 640), **caractérisé en ce que** les moyens de pivotement (61, 62, 63, 64) sont agencés de telle sorte que le plan de pivotement (300) de l'un au moins des moyens de pivotement (61, 62, 63, 64) est susceptible de pivoter sensiblement en direction longitudinale.

2. Dispositif selon la revendication 1, **caractérisé en ce que** l'appui droit (40) à plusieurs branches comprend au moins une autre partie de branche (4n) et l'appui gauche (50) à plusieurs branches comprend au moins une autre partie de branche (5n), et entre deux parties de branche voisines (43, 4n, 52, 5n) est réalisé un autre moyen de pivotement respectif (6n) présentant un axe de pivotement (6n0) autour duquel deux parties de branche voisines (43, 4n, 53, 5n) sont susceptibles de pivoter l'une par rapport à l'autre sensiblement à l'intérieur d'un plan de pivotement (300) que traverse sensiblement verticalement l'axe de pivotement (6n0).

3. Dispositif selon l'une des revendications précédentes, **caractérisé en ce qu'**au moins un moyen de pivotement (61, 62, 63, 64) comprend une charnière ou une liaison articulée.

4. Dispositif selon la revendication 1 ou 2, **caractérisé en ce qu'**au moins un moyen de pivotement (61, 62, 63, 64) est formé à l'aide d'un rétrécissement de matière.

5. Dispositif selon la revendication 1 ou 2, **caractérisé en ce qu'**au moins un moyen de pivotement (61, 62, 63, 64) est réalisé à partir d'un élément en tissu partiellement flexible.

6. Dispositif selon l'une des revendications précédentes, **caractérisé en ce que** la première partie de branche (41) de l'appui droit (40) à plusieurs branches et la première partie de branche (51) de l'appui gauche (50) à plusieurs branches s'étendent chacune au moins partiellement jusque dans la zone arrière du revêtement d'assise.

7. Dispositif selon l'une des revendications précédentes, **caractérisé en ce qu'**au moins une barrette de liaison (80) est réalisée entre la première partie de branche (41) et la première partie de branche (51) des appuis (40, 50) à plusieurs branches.

8. Dispositif selon l'une des revendications précédentes, **caractérisé en ce que** l'appui droit (40) et l'appui gauche (50) à plusieurs branches comprennent chacun sensiblement dans la zone des extrémités des quartiers (71, 72) un premier moyen de fixation de sangle (101), sensiblement dans la zone avant du revêtement d'assise un second moyen de fixation de sangle (102) et sensiblement dans la zone arrière du revêtement d'assise un troisième moyen de fixation de sangle (103).

9. Dispositif selon la revendication 8, **caractérisé en ce qu'**une extrémité (111) d'une sangle (110) est susceptible d'être fixée sur le premier moyen de fixation de sangle (101), la sangle (110) est susceptible de traverser une ouverture (105) d'un premier arceau (104) et d'être fixée sur le troisième moyen de fixation de sangle (103), et depuis le troisième moyen de fixation de sangle (103) la sangle (110) est susceptible de traverser une ouverture (107) d'un second arceau (106) et d'être fixée sur le second moyen de fixation de sangle (102).

10. Dispositif selon l'une des revendications précédentes, **caractérisé en ce que** le dispositif ne comprend pas de tête de selle et/ou pas d'arcade de garrot.

11. Arçon de selle (20) pour montures et animaux de transport, comportant une surface d'assise (30) qui comprend une zone avant (31) tournée vers la tête d'une monture ou d'un animal de transport, une zone arrière (32) et deux zones latérales (33, 34), et
un dispositif selon l'une des revendications 1 à 10 susceptible d'être fixé sur l'arçon de selle (20).

12. Arçon de selle (20) selon la revendication 11, **caractérisé en ce que** dans la zone avant (31) de la surface d'assise (30) est ménagée une échancrure (35).

13. Selle (200) à poser sur le dos d'une monture ou d'un animal de transport, comportant un revêtement d'assise, **caractérisée par**
un dispositif selon l'une des revendications 1 à 10, et par au moins un élément de matelassure (210) susceptible d'être fixé sur la face inférieure du revêtement d'assise.

14. Selle selon la revendication 13, **caractérisée en ce que** deux éléments de matelassure (210, 211) réalisés séparément sont susceptibles d'être fixés sur la face inférieure de la surface d'assise (30).
